# EUROPEAN PATENT SPECIFICATION

(11) **EP 1 494 011 B1**
(45) Date of publication and mention of the grant of the patent: **12.03.2008**
(21) Application number: 04253453.7
(22) Date of filing: 10.06.2004
(51) Int. Cl.: G01N 21/90, B07C 5/34, B08B 9/46

(54) **Container inspection machine**
Inspektionsvorrichtung für Container
Appareil pour contrôler des conteneurs

(30) Priority: 30.06.2003 US 610422
(43) Date of publication of application: 05.01.2005
(73) Proprietor: Emhart Glass S.A., 6330 Cham (CH)
(72) Inventor: Tennakoon, Sarath G., Elmira New York 14905 (US); Raupp, Henry F., Freeville New York 13068 (US)
(74) Representative: Warren, Anthony Robert

(56) References cited:
- EP-A- 0 926 486
- US-A- 3 745 314
- US-A- 3 770 969
- US-A- 4 249 075
- US-A- 5 699 152

## Description

The present invention relates to machines which inspect containers such as bottles for defects, and more particularly to a system for inspecting the heel code at the bottom of a bottle.

Machines for inspecting glass bottles correlate defects with mold cavity so that an operator will know where a defective bottle was made and can promptly adjust the bottle making process to eliminate the problem at that mold. Mold data in the form of raised dots of glass are often present on the outer wall of the bottle just above the bottom of the bottle (a heel code). These glass dots generally are located in a common horizontal plane.

US-A-3,770,969 discloses a machine for inspecting a glass container, generally of the type defined in the preamble of claim 1, comprising means for supporting a container vertically at an inspection location, a camera having an imaging area vertically beneath a container when supported at the inspection location, light source means for directing a beam of light downwardly through the container, and an iris having a circular opening selectively sized for limiting the beam of light to light which passes through the opening of the supported container and illuminates the bottom of the supported container.

The machine disclosed in this US-A is intended to detect critical imperfections located in the bottom of the container which necessitate rejection of the container, but not to detect non-critical imperfections, such as mold marks, which do not require the container to be rejected. For this purpose, the machine includes an optical arrangement, located between the bottom of the container and the camera comprising collecting and imaging lens groups, which minimizes the influence of non-critical imperfections.

US-A-5,699,152 discloses a system for inspecting the interior surface of an opaque object, such as a metal container, for defects. An ellipsoidal annular mirror located above the open top of the container forms a first image of the interior of the neck of the container which is captured by a first camera. A planar image-splitting mirror located between the ellipsoidal mirror and first camera forms a second image of the neck flange of the container which is captured by a second camera. The lower interior portion of the container, including the bottom wall of the container, is inspected by a second system, including a third camera which views the lower interior portion of the container either directly through the open top of the container or via a planar image-splitting mirror located above the open top.

Neither of the US-As discussed above is concerned with detecting or reading the heel code of a container.

It is an object of the present invention to provide a machine for inspecting glass containers which can read a heel code on a container.

According to the present invention, there is provided a machine for inspecting a container as defined in the characterizing clause of claim 1.

The present invention will now be described with reference to the accompanying drawings which illustrate a presently preferred embodiment incorporating the principles of the invention, and in which:

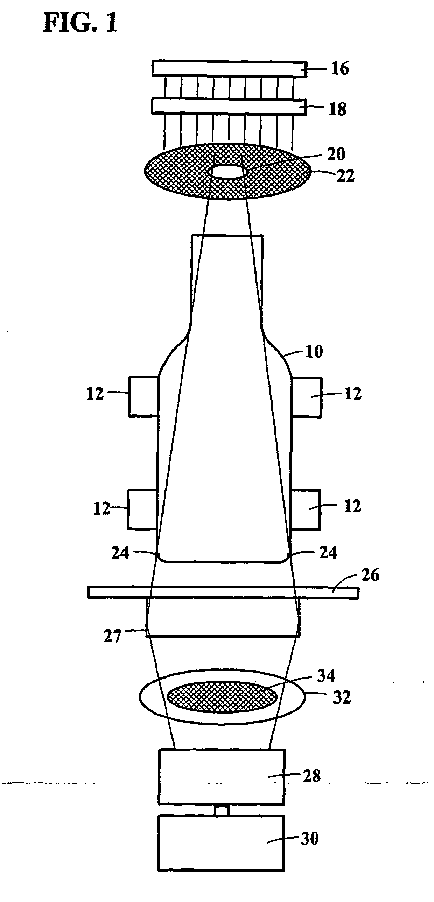

Figure 1 is an elevational schematic view of a system for inspecting the bottom of a bottle for defects; and

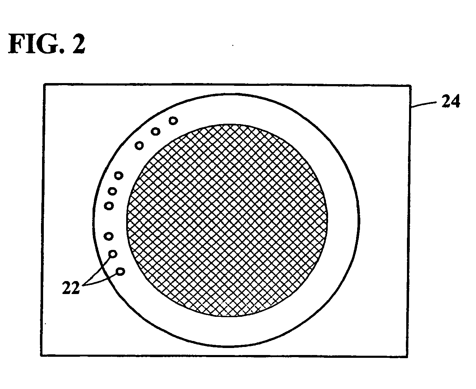

Figure 2 is a schematic showing of the camera image of a heel code.

A bottle 10 is supported at an inspection station by opposed pairs of drive belts 12. Above the top of the bottle is located a light source 16 in the form of an L.E.D. light board (a rectangular, e.g. square, matrix of L.E.D's). The emitted light is diffused by a diffuser 18 and then passes through the opening 20 of an iris 22. The opening is selectively sized to permit light to pass through the opening of the bottle and travel downwardly to illuminate the bottom of the bottle outwardly to the sidewall of the bottle above the base where nubs of glass 24 are present representing coded information pertinent to the bottle (a heel code).

The light passes through the bottle and then the circular beam corresponding to the beam of light which has passed through the bottle proximate the heel code, and includes an annular portion containing the heel code, will be reflected by a cylindrical mirror 27 which is located between the bottom of the bottle and the camera towards a wide angle lens of an imaging camera 28 (a Fresnel lens 26 can be located between the cylindrical mirror and the bottom of the bottle to reduce the diameter of the light beam). A mask, such as a transparent plate 32 having a circular black center 34, is located between the cylindrical mirror and the imaging surface of the camera. The size of the circular black center is defined so that light other than the annular beam portion containing the heel code will be prevented from reaching the imaging surface of the camera. The image will be evaluated by a processor 30. If desired, the iris could be automated and the light source and diffuser could be part of a vertically displaceable unit.

## Claims

1. A machine for inspecting a round container (10) having an axis, comprising
means (12) for supporting a container vertically at an inspection location,
a camera (28) having an imaging area vertically beneath a container when supported at the inspection location,
light source means (16) for directing a beam of light downwardly through the container,
an iris (22) having a circular opening (20) selectively sized for limiting the beam of light to light which passes through the opening of the supported container and illuminates the bottom of the supported container,
**characterized in that**
the machine is operable to detect the heel code (24) of a round container (10),
the circular opening (20) of the iris (22) is sized to limit the beam of light to light which passes through the opening of the supported container and illuminates the bottom of the container outwardly to the heel code area of the container,
and **in that** the machine further comprises
a cylindrical mirror (27) coaxial to the axis of the container for reflecting the beam of light from the container (10), which beam includes an annular beam portion containing the heel code (24), towards said camera (28), and
a circular opaque mask (34) located between the bottom of the container and the camera for preventing light radially inwardly of the annular beam portion from reaching the camera.

2. A machine according to claim 1, wherein said mask comprises a black circular center (34) of a transparent plate (32) located between the cylindrical mirror (27) and the camera (28).

3. A machine according to claim 1 or 2, wherein said light source means (16) comprises a L.E.D. light board and a diffuser (18).

## Patentansprüche

1. Maschine zum Prüfen eines runden Behälters (10) mit einer Achse, umfassend
eine Einrichtung (12) zum vertikalen Halten eines Containers an einem Prüfort,
eine Kamera (28) mit einem Bildbereich vertikal unterhalb eines Behälters, wenn er am Prüfort gehalten wird,
eine Lichtquelle (16), um einen Lichtstrahl abwärts durch den Behälter zu richten, und
eine Iris (22) mit einer kreisförmigen Öffnung (20) wählbarer Größe, um den Lichtstrahl auf ein Licht zu begrenzen, das durch die Öffnung des gehaltenen Behälters fällt und den Boden des gehaltenen Behälters beleuchtet,
**dadurch gekennzeichnet, dass**
die Maschine so betrieben werden kann, dass der Bodencode (24) eines runden Behälters (10) erfasst wird, dass
die kreisförmige Öffnung (20) der Iris (22) von einer solchen Größe ist, dass der Lichtstrahl auf ein Licht begrenzt wird, das durch die Öffnung des gehaltenen Behälters fällt und im Boden des Behälters auswärts zum Bodencodebereich des Behälters verläuft,
und dass die Maschine weiterhin
einen zylindrischen Spiegel (27) umfasst, der koaxial zur Achse des Behälters angeordnet ist, um den Lichtstrahl vom Behälter (10), der einen ringförmigen Strahlenbereich umfasst, der den Bodencode (24) enthält, zu der Kamera (28) zu reflektieren, sowie
eine kreisförmige undurchsichtige Maske (34), die zwischen dem Boden des Behälters und der Kamera vorgesehen ist, um zu verhindern, dass Licht radial einwärts des ringförmigen Strahlenabschnittes die Kamera erreicht.

2. Maschine nach Anspruch 1, wobei die Maske ein schwarzes kreisförmiges Zentrum (34) einer durchsichtigen Platte (32) umfasst, die zwischen dem zylindrischen Spiegel (27) und der Kamera (28) angeordnet ist.

3. Maschine nach Anspruch 1 oder 2, wobei die Lichtquelle (16) eine L.E.D.-Tafel und einen Diffusor (18) umfasst.

## Revendications

1. Appareil pour le contrôle d'un conteneur circulaire (10) ayant un axe, comprenant
des moyens (12) pour supporter un conteneur verticalement au niveau d'un emplacement de contrôle,
une caméra (28) ayant une zone de formation d'image située verticalement sous un conteneur lorsque celui-ci est supporté au niveau de l'emplacement de contrôle,
des moyens formant source de lumière (16) pour diriger un faisceau de lumière vers le bas à travers le conteneur,
un iris (22) ayant une ouverture circulaire (20) dimensionnée de façon sélective pour limiter le faisceau de lumière à une lumière qui passe à travers l'ouverture du conteneur supporté et éclaire le fond du conteneur supporté,
**caractérisé en ce que**
l'appareil permet de détecter le code de talon (24) d'un conteneur circulaire (10),
l'ouverture circulaire (20) de l'iris (22) est dimensionnée pour limiter le faisceau de lumière à une lumière qui passe à travers l'ouverture du conteneur supporté et éclaire le fond du conteneur à l'extérieur de la zone du code de talon du conteneur,
et **en ce que** l'appareil comprend en outre
un miroir cylindrique (27) coaxial avec l'axe du conteneur pour réfléchir le faisceau de lumière provenant du conteneur (10), lequel faisceau comprend une partie de faisceau annulaire contenant le code de talon (24), vers ladite caméra (28), et
un masque opaque circulaire (34) situé entre le fond du conteneur et la caméra pour empêcher la lumière diffusée radialement vers l'intérieur de la partie de faisceau annulaire d'atteindre la caméra.

2. Appareil selon la revendication 1, dans lequel ledit masque comprend un centre circulaire noir (34) d'une plaque transparente (32) située entre le miroir cylindrique (27) et la caméra (28).

3. Appareil selon la revendication 1 ou 2, dans lequel lesdits moyens formant source de lumière (16) comprennent un panneau lumineux à diodes électroluminescentes et un diffuseur (18).
